# EUROPÄISCHE PATENTSCHRIFT

(11) **EP 1 601 957 B1**
(45) Veröffentlichungstag und Bekanntmachung des Hinweises auf die Patenterteilung: **23.08.2006**
(21) Anmeldenummer: 03816139.4
(22) Anmeldetag: 07.03.2003
(51) Int. Cl.: G01N 27/414, G01N 27/333

(54) **IONENSENSITIVER FELDEFFEKTTRANSISTOR UND VERFAHREN ZUM HERSTELLEN EINES IONENSENSITIVEN FELDEFFEKTTRANSISTORS**
ION-SENSITIVE FIELD EFFECT TRANSISTOR AND METHOD FOR PRODUCING AN ION-SENSITIVE FIELD EFFECT TRANSISTOR
TRANSISTOR A EFFET DE CHAMP SENSIBLE AUX IONS ET PROCEDE POUR PRODUIRE UN TRANSISTOR A EFFET DE CHAMP SENSIBLE AUX IONS

(43) Veröffentlichungstag der Anmeldung: 07.12.2005
(73) Patentinhaber: Fraunhofer-Gesellschaft zur Förderung der angewandten Forschung e.V., 80686 München (DE)
(72) Erfinder: KUNATH, Christian, 01108 Dresden (DE); KURTH, Eberhard, 01468 Moritzburg (DE)
(74) Vertreter: Zimmermann, Tankred Klaus
(86) Internationale Anmeldenummer: PCT/EP2003/002359
(87) Internationale Veröffentlichungsnummer: WO 2004/079355

(56) Entgegenhaltungen:
- WO-A-94/22006
- US-A- 5 288 563
- WAKIDA S ET AL: "pH-sensitive ISFETs based on titanium nitride and their application to battery monitor" TRANSDUCERS. SAN FRANCISCO, JUNE 24 - 27, 1991, PROCEEDINGS OF THE INTERNATIONAL CONFERENCE ON SOLID STATE SENSORS ANDACTUATORS, NEW YORK, IEEE, US, Bd. CONF. 6, 24. Juni 1991 (1991-06-24), Seiten 222-224, XP010037245 ISBN: 0-87942-585-7
- GRACIA I ET AL: "Test structures for ISFET chemical sensors" PROCEEDINGS OF THE INTERNATIONAL CONFERENCE ON MICROELECTRONIC TEST STRUCTURES (ICMTS). SAN DIEGO, MAR. 16 - 19, 1992, NEW YORK, IEEE, US, 16. März 1992 (1992-03-16), Seiten 156-159, XP010059410 ISBN: 0-7803-0535-3
- DATABASE WPI Section Ch, Week 198521 Derwent Publications Ltd., London, GB; Class L03, AN 1985-126646 XP002260577 & JP 60 066151 A (TOKUYAMA SODA KK), 16. April 1985 (1985-04-16)

## Beschreibung

Die vorliegende Erfindung bezieht sich auf Feldeffekttransistoren und insbesondere auf ionensensitive Feldeffekttransistoren sowie auf ein Verfahren zum Herstellen derselben.

Ionensensitive Feldeffekttransistoren (ISFET) dienen zur Messung von Ionenkonzentrationen oder speziellen Stoffkonzentrationen in Lösungen unterschiedlicher Zusammensetzung und Leitfähigkeiten. Anwendungen von ionensensitiven Feldeffekttransistoren sind beispielsweise zum kontinuierlichen Nachweis von Konzentrationen in der Umweltüberwachung, in der industriellen Prozeßüberwachung, in der Lebensmittelindustrie, in der Biochemie bzw. Medizintechnik und in der Laboranalytik. Dabei ist insbesondere eine hochpräzise Konzentrationserfassung und eine minimale Langzeitdrift des Sensors zu fordern, was ferner mit einem akzeptablen Preis des Sensors verbunden sein sollte.

Bekannterweise werden Ionenkonzentrationen in wäßrigen Medien mit Glaselektroden sowohl in der Prozeßmeßtechnik als auch in der Labormeßtechnik durchgeführt. Aus technischen Gründen, insbesondere weil ein ausreichendes großes Innenpuffervolumen kombiniert mit einer ebenfalls ausreichend beschichteten Innenableitelektrode und einer zulässig stabilen Glasmembran als sensoraktive Komponente erforderlich ist, besteht keine Möglichkeit der effizienten Miniaturisierung der Glaselektroden. Das Innenpuffervolumen und die Beschichtung der Innenableitelektrode müssen der für den Sensor veranschlagten Temperatur-Zeit-Belastung genügen. Zum anderen ist das pH-Meßsystem der Gaselektrodenmeßkette aufgrund der notwendigen Glasmembrandicke ein System mit einer hohen Impedanz, wodurch es auf Umweltstörungen empfindlich ist. Dies erfordert unter anderem eine Abschirmung der Meßleitungen, wobei die Abstände der Elektroden, d. h. der Glaselektrode zu der Bezugselektrode, sowie der Elektroden zum Meßgerät zu minimieren sind.

Ein weiterer Nachteil der Glaselektroden besteht darin, daß dieselben Gefahr laufen, bei einem Bruch scharfkantige Glassplitter freizusetzen, so daß ein Einsatz von Glaselektroden in bestimmten Bereichen, beispielsweise in der Lebensmitteltechnik, eingeschränkt ist.

Im Gegensatz zu den Glaselektroden stellt die Verwendung von ionensensitiven Feldeffekttransistoren eine bruchsichere Alternative zu den herkömmlichen Glaselektroden dar. Ferner eignen sich diese Sensoren für die Miniaturisierung des Meßsystems, die Herstellung integrierter Systeme und eine kostengünstige Fertigung, so daß der ionensensitive Feldeffekttransistor der konventionellen Glaselektrode bezüglich der oben genannten Punkte überlegen ist.

Die Anwendung der ionensensitiven Feldeffekttransistoren für die Ionenkonzentrationsmessung, und insbesondere zur Messung des pH-Werts in wäßrigen Medien, ist seit langem bekannt und beispielsweise in der Druckschrift Bergveld P., IEEE Trans. Biomed. E 17 (1970) 70, beschrieben. Zur Herstellung wasserstoffionenempfindlicher Schichten der ionensensitiven Feldeffekttransistoren wurden bereits verschiedene Materialien, wie beispielsweise SiO₂, Si₃N₄, Al₂O₃, AlₓSi_{y}O_{z}, ZrO₂, Ta₂O₅ und diamantartiger Kohlenstoff (DLC; DLC = Diamond like Carbon), untersucht und beschrieben. Diesbezüglich wird auf die Druckschriften Van der Schoot u. a., Sensors & Actuators4 (1983), 267; Sobczynska D. u. a., Sensors & ActuatorsiS (1984), 93; Klein M. u. a., VD1-Berichte 509 (1983), 275; Sakai T. u. a., Internat. Electron Devices Meeting, Techn._Digest (1987), 711; Abe H. u. a., IEEE Trans. Electron. Dev. ED-26 (1979), 1.939 verwiesen. Mit der Einführung der Metalloxidschichten wurden deutliche Verbesserungen der Sensoreigenschaften gegenüber den ionensensitiven Feldeffekttransistoren mit einer sensitiven Schicht aus Si₃N₄ erreicht, insbesondere bezüglich der pH-Empfindlichkeit, der pH-Sensorlinearität, der pH-Selektivität, d. h. der Querempfindlichkeit gegenüber anderen als das zu messende H⁺-Ion, dem Hystereseverhalten, dem Response-Verhalten, der Erstinbetriebnahmezeit, der Lichtempfindlichkeit, der Drift und der Langzeitstabilität. Die vorteilhaftesten Sensoreigenschaften von ionensensitiven Feldeffekttransistoren wurden bekannterweise mit einer sensitiven Schicht aus Ta₂O₅ erreicht.

Die Verwendung von Metalloxiden als sensitive Schicht weist jedoch den Nachteil auf, daß aufgrund der kristallinen Struktur der Metalloxide nach den notwendigen Ausheil-Prozessen (Annealing-Prozessen) die Einschwingzeiten dieser Sensoren bei Wechsel der Meßlösung gegenüber den ionensensitiven Feldeffekttransistoren mit den normalerweise amorphen Si₃N₄-Schichten größer ist. Ohne ausreichende Annealing-Prozesse erreichen die Metalloxidschichten nicht die Vorzüge gegenüber sensitiven Schichten aus Si₃N₄. Eine weitere Verbesserung bezüglich der Sensorstabilität von ionensensitiven Feldeffekttransistoren in aggressiven Medien, wie beispielsweise Basen und Flußsäuren, wird den auf Kohlenstoff basierenden Schichten zugesprochen, wobei jedoch das Response-Verhalten derselben schlechter als bei einer sensitiven Schicht aus Si₃N₄ ist.

Die Einsatzbereiche der oben beschriebenen ionensensitiven Feldeffekttransistoren mit Metalloxidschichten sind zum großen Teil auf begrenzte pH-Bereiche und Temperaturbereiche der Lösungen beschränkt. Dadurch erfolgte bisher keine durchgehende Einführung von pH-Messungen auf Grundlage von ionensensitiven Feldeffekttransistoren in der industriellen Prozeßmeßtechnik oder in der Umweltüberwachung, so daß eine Ergänzung oder ein Ersatz der Glaselektroden in diesen Bereichen nicht durchgeführt wurde.

Dabei ist insbesondere zu nennen, daß alle oben aufgeführten Schichtmaterialien Einkomponentensysteme sind, d. h. es handelt sich um einfache, reine Verbindungen, die bezüglich ihrer einen pH-sensiblen Komponente, beispielsweise [TaOH] bei Ta₂O₅, nach der Hydrolyse der Oberfläche in der Lösung, in ihrer Acidität beschränkt sind. Dies bedeutet, daß die Einkomponentensysteme in basischen oder sauren Lösungen nichtlinear werden, da lediglich ein definierter pKₛ und ein pH_{PZC} existiert. Die beschränkte Acidität ist ferner die Ursache von irreversiblen Schädigungen in der Sensorschicht unter hohen Temperaturen. Bei der Glaselektrode ist die sensoraktive Schicht ein auf SiO₂basierendes Glas mit geringen Zusätzen von verschiedenen Metalloxiden, die sowohl die Acidität des [SiOH] besser linearisieren als auch die Stabilität gegenüber Basen und Säuren erhöhen, als es bei einem reinen Halbmetalloxid SiO₂ der Fall wäre.

Die notwendige Bedingung einer Glasstruktur der sensiblen Schicht ist für den ionensensitiven Feldeffekttransistor nicht gegeben. Dadurch können bei demselben die sensornachteiligen Eigenschaften der Glasgerüstsubstanz SiO₂ vermieden werden. Solche nachteilige Eigenschaften sind die sich verändernden Sensoreigenschaften durch flußsäurehaltige Lösungen und die Querempfindlichkeit gegenüber Alkaliionen, insbesondere Na⁺-Ionen (siehe beispielsweise Bergveld P., IEEE Trans. Biomed. E 17 (1970), 70). In basischen Lösungen mit Na⁺-Ionen wird dann ein geringerer pH-Wert angezeigt als es der realen H⁺-Ionenkonzentration entsprechen würde. In diesen basischen Lösungen werden vor allem bei höheren Temperaturen die pH-Sensoreigenschaften irreversibel immer schlechter und schließlich die Lebensdauer begrenzt, da SiO₂ in starken alkalischen Lösungen aufgelöst wird. Die Lebensdauer wird ferner auch durch die Ätzung in flußsäurehaltigen Lösungen eingeschränkt. In der Praxis werden dabei die Metalloxidzugaben verändert, um entweder die Stabilität in aggressiven Medien zu erhöhen oder die Querempfindlichkeit zu verringern, wobei jedoch die Gerüstsubstanz SiO₂ die Einstellungsmöglichkeiten begrenzt, so daß lediglich eine begrenzte Verbesserung der Elektrode ermöglicht wird.

Ferner können auch an Oberflächen von Metallsilikaten Querempfindlichkeiten gegenüber Alkaliionen auftreten, die im Falle von Alumosilikaten AlₓSi_{y}O_{z} deutlich stärker ausgeprägt sein können als bei einem reinen thermischen SiO₂ (siehe beispielsweise Abe H. u. a., IEEE Trans. Electron. Dev. ED-26 (1979), 1.939 oder Esashi M., Matsuo T., IEEE Trans. Biomed. BME-25 (1978), 184). Es ist ferner bekannt, siehe beispielsweise Leistiko O., Physica Scripta 18 (1978), 445, das reines thermisches SiO₂ bei ionensensitiven Feldeffekttransistoren eine geringe Querempfindlichkeit bezüglich Na⁺- und K⁺-Ionen aufweist, wobei jedoch eine starke Hysterese von ±0,2 pH und eine deutlich geringere Steilheit mit etwa 30 mV/pH verglichen mit einer Glaselektrode mit > 58 mV/pH auftritt. In der Druckschrift Bergveld P., IEEE Trans. Biomed. E 17 (1970) 70, wurde eine erhöhte Querempfindlichkeit auf Na⁺-Ionen beobachtet, die darauf beruhte, daß ein Al-Gate auf dem SiO₂ nach dem CMOS-Prozeß abgeätzt worden ist. Bereits geringe Temperungen um 400°C im Formiergasannealing reichen aus, um Monolagen von Alumosilikat auf dem SiO₂ zu bilden, die die pH-Sensoreigenschaften deutlich verändern. Durch die Bildung des Alumosilikats konnte dabei die chemische Stabilität erhöht werden, was jedoch zu einer Herabsetzung der pH-Selektivität führte.

Ein weiterer Nachteil von reinen Metalloxidverbindungen besteht darin, daß ihr molekularer Strukturaufbau lediglich begrenzt durch Temperatur-Zeit-Prozesse einstellbar ist. Hohe Temperaturen nach der Schichtabscheidung führen zwar zu der notwendigen Verdichtung und Strukturdefektfreiheit des Metalloxides und damit zu einer guten chemischen Stabilität der Schicht, jedoch auch zur Kristallisation und damit zur Ausbildung ausgeprägter Störungen der Oberfläche, die bis zum Substrat reichen können. Es ist jedoch für eine gute Eigenschaft des Sensors zu fordern, daß die Sensoroberfläche homogen, glatt und geschlossen sein sollte.

Die Aufgabe der vorliegenden Erfindung besteht darin, einen ionensensitiven Feldeffekttransistor mit verbesserten Sensoreigenschaften zu schaffen.

Diese Aufgabe wird durch einen ionensensitiven Feldeffekttransistor gemäß Anspruch 1 und ein Verfahren zum Herstellen eines ionensensitiven Feldeffekttransistors gemäß Anspruch 6 gelöst.

Die vorliegende Erfindung schafft einen ionensensitiven Feldeffekttransistor mit einem Gate, das ein Gate mit einer sensitiven Schicht aus einem Metalloxidnitridgemisch und/oder eine Metalloxidnitridgemischverbindung aufweist.

Die vorliegenden Erfindung schafft ferner ein Verfahren zum Herstellen eines ionensensitiven Feldeffekttransistors mit folgenden Schritten:
Bereitstellen eines Substrats mit einem Source-Bereich und einem Drain-Bereich; und
Erzeugen eines Gates mit einer sensitiven Schicht, die ein Metalloxidnitridgemisch und/oder eine Metalloxidnitridgemischverbindung aufweist.

Die vorliegenden Erfindung basiert auf der Erkenntnis, daß ein ionensensitiver Feldeffekttransistor mit verbesserten Sensoreigenschaften dadurch erreicht werden kann, daß das Gate eine sensitive Schicht aus einem Metalloxidnitridgemisch und/oder einer Metalloxidnitridgemischverbindung aufweist. Unter einem Metalloxidnitridgemisch wird dabei jede Zusammensetzung verstanden, die sich aus einem ersten Metall M1, einem zweiten Metall M2, Sauerstoff O und Stickstoff N ergibt. Unter einer Metalloxidnitridgemischverbindung wird jede Verbindung verstanden, die sich aus einem Metalloxidnitridgemisch mit einem anderen chemischen Element oder einer anderen chemischen Verbindung ergibt. Beispielsweise gehören Metalloxidnitridgemische und Metalloxidnitridgemischverbindungen der Klasse der Oxynitride an, unter anderem das System HfₐTa_{b}O_{c}N_{d}, die sich durch eine hohe chemische Stabilität auszeichnen.

Durch die Mischung von zwei oder mehreren Metalloxiden ergeben sich mehrere pKₛ (pKₛ = negativer Logarithmus der Dissoziationskonstante), wodurch der lineare pH-Bereich des Sensors ausgedehnt wird und ein nichtlinearer Bereich eingeschränkt oder beseitigt wird, wobei ferner die Querempfindlichkeit gesenkt wird und eine hohe chemische Stabilität erreicht wird. Beispielsweise kann bei der Klasse der Oxynitride durch eine exakte Zusammensetzung, beispielsweise a, b, c und d, des HfₐTa_{b}O_{c}N_{d} mehrere pKₛ bzw. die Größe einzelner pKₛ eingestellt werden, so daß die Voraussetzung für eine weiterreichende pH-Linearität gegeben ist.

Ferner erhöht sich die Lebensdauer des ionensensitiven Feldeffekttransistors durch die Möglichkeit, Säure-/Basenkomplementäre Gemische bzw. Verbindungen herzustellen, da beispielsweise bei übergroßen Belastungen durch starke Säuren bei hohen Temperaturen oder durch starke Laugen bei hohen Temperaturen stets eine Partialkomponente als passivierende Monolage die Auflösung der Sensorschicht stoppt. Dadurch kann auf eine silikatische Komponente verzichtet werden, die möglicherweise die Querionenempfindlichkeit auf Alkaliionen erhöhen würde, ohne daß die Stabilität gegen Flußsäure geringer wird.

Die erfindungsgemäße sensitive Schicht kann sowohl aus lediglich einem Material bestehen oder auch mehreren übereinander aufgebrachten Schichten unterschiedlicher Materialien aufweisen. Bei einem Ausführungsbeispiel kann die sensitive Schicht auch mehrere aufeinander aufgebrachte Schichten mit unterschiedlichen Konzentrationen der Elemente umfassen.

Der Einsatz von definierten Zusätzen an weiteren Metalloxiden und Stickstoff erhöht ferner die Stabilität amorpher und nanokristalliner Strukturen bei höheren Annealing-Temperaturen, wodurch Korngrenzen vermieden werden. Die Mischung von zwei oder mehreren Metalloxiden ermöglicht eine erhöhte Verdichtung des Materials durch die unterschiedlichen Metallatomdurchmesser, ohne daß eine Kristallisation eintritt, oder eine Minimierung der Kristallinität oder Korngrenzenintensität und eine Maximierung des amorphen Charakters durch den Zusatz von Stickstoff bei möglichst hoher Annealing-Temperatur und Annealing-Zeit. Dadurch können die im Stand der Technik bei Temperaturbehandlungen von einfachen Metalloxiden zur Verbesserung der chemischen Stabilität auftretenden kristallinen Modifikationen vermieden werden, die sich im Stand der Technik nachteilig auswirken, da an den Korngrenzen Schwachstellen entstehen, die Ionendiffusionen begünstigen, eine Drift erhöhen oder die Lichtempfindlichkeit verschlechtern.

Gemäß einem Ausführungsbeispiel kann durch Variation des Stickstoffanteils in der Schicht die amorphe bzw. nanokristalline Struktur, die für die Sensoreigenschaften vorteilhaft ist, garantiert werden.

Ferner kann durch die Mischung von zwei oder mehreren Metalloxiden durch gezielte stöchiometrische Verhältnisse verschiedener Metalloxide der Ausdehnungskoeffizient der sensitiven Schicht eingestellt werden. Die Anpassung des Ausdehnungskoeffizienten kann an das Gateoxid, das vorzugsweise SiO₂ umfaßt, oder an das Substrat, das vorzugsweise Si umfaßt, erfolgen. Ferner können zwischen der sensitiven Schicht aus einem Metalloxidnitridgemisch oder einer Metalloxidnitridgemischverbindung und dem Gateoxid ein oder mehrere Grenzflächenschichten vorgesehen sein, die Metalloxidsilikate und/oder Metalloxidnitridsilikate umfassen können. Die Anpassung der Ausdehnungskoeffizienten bewirkt, daß durch die Aufheiz- und Abkühlvorgänge der Annealing-Temperung die Schichten nicht reißen und eine Minimierung der Zug- und Druckspannungen der Schichten bei allen Prozeßtemperaturen erreicht wird.

Die sensitive Schicht kann sowohl direkt oder auf eine SiO₂-Schicht, die als Übergangsschicht oder als Haftschicht dient, aufgebracht werden.

Ferner weist der erfindungsgemäße ionensensitive Feldeffekttransistor verbesserte Eigenschaften der Transistorparameter auf. Es ist bekannt, daß neben den Sensoreigenschaften auch die Reproduzierbarkeit der Transistorparameter entscheidend für die Anwendung der ISFET-Sensoren ist.

Die Transistorparameter bestimmen die Arbeitspunktlage des Sensors und die Streuung der Sensorparameter. Die Grundlage von homogenen Transistorparametern ist die Beherrschung der Isolatorgrenzflächen zum Silizium und bei Mehrfachschichten zwischen den Schichten. Aufgrund der gezielten Einstellung definierter Verbindungen, wie beispielsweise HfₐTa_{b}O_{c}N_{d}, mit monokristalliner oder amorpher Struktur und homogenen Grenzflächenübergängen bis zum Substrat können Transistoren gefertigt werden, die diese Bedingungen erfüllen. Dies wird dadurch erreicht, daß durch eine freie Einstellung der Parameter a, b, c und d Isolatorschichten aufgebaut werden können, die einen homogenen Übergang vom Substrat zu der sensitiven Oberfläche aufweisen. Ferner kann durch das Verhältnis von Sauerstoff zu Stickstoff in der Verbindung das Kristallisationsverhalten bei Temperaturbehandlung bestimmt werden. Durch die Variierbarkeit der Elementverhältnisse können somit Sensoren mit hoher chemischer Stabilität gepaart mit schnellem Ansprechverhalten hergestellt werden.

Der Einsatz von Metalloxidnitridgemischen und Metalloxidnitridgemischverbindungen als sensitive Schicht eines ionensensitiven Feldeffekttransistors ermöglicht daher gegenüber den bekannten ionensensitiven Feldeffekttransistoren eine zur Zeit noch nicht erreichte pH-Meßpräzision, ohne den hohen Aufwand einer Pt-H₂-Elektrode, gepaart mit einer noch größeren chemischen Stabilität gegenüber den einfachen Metalloxidverbindungen bzw. Metallnitridverbindungen, wie beispielsweise HfO₂ und Ta₂O₅.

Bei einem Ausführungsbeispiel kann beispielsweise die sensitive Schicht einen Konzentrationsgradienten eines der Elemente des Metalloxidnitridgemisches bzw. der Metalloxidnitridgemischverbindung, d. h. beispielsweise ein Gradient der Konzentration eines der Metalle, ein Gradient des Sauerstoffs oder ein Gradient des Stickstoffs, aufweisen. Damit kann erreicht werden, daß der direkte Oberflächenbereich der sensitiven Schicht, der in Verbindung mit der Meßflüssigkeit steht, eine gegenüber anderen Bereichen der sensitiven Schicht erhöhte chemische Stabilität aufweist, um eine Zerstörung der sensitiven Schicht durch aggressive Meßmedien zu lindern.

Die Herstellung der erfindungsgemäßen sensitiven Schicht aus einem Metalloxidnitridgemisch und/oder einer Metalloxidnitridgemischverbindung kann bei einem Ausführungsbeispiel auf eine einfache Art und Weise durchgeführt werden, indem eine erste Metalloxidschicht mit einer zweiten Schicht aus einem anderen Metall, einer Metallegierung oder einem Metalloxid überschichtet wird und durch geeignete Temperungen und Tempergasen an der Oberfläche der ersten Metalloxidschicht ein Gemisch hergestellt wird. Daraufhin werden die Bereiche der zweiten Schicht, die nicht durch die Temperung chemisch verändert wurden, durch eine Ätzung entfernt.

Das oben beschriebene Herstellungsverfahren weist ferner den Vorteil auf, daß durch die Überschichtung mit einem Metall oder einer Metallegierung der empfindliche Kanalbereich für bestimmte Zeit vor Umweltstörungen, insbesondere vor elektrischen Feldern, geschützt wird. Durch den metallischen Schutz über dem Kanal werden die Transistorparameter reproduzierbarer. Ferner kann durch die Überschichtung eine bereits vorhandene ungenügende Verdichtung des ersten Metalloxids verbessert werden, wodurch sich durch das Herstellungsverfahren auf eine einfache Weise gute Struktureigenschaften der sensitiven Schicht erreichen lassen.

Aufgrund der guten Sensoreigenschaften und einer hohen Reproduzierbarkeit der Transistorparameter eignet sich der ionensensitive Feldeffekttransistor auf der Basis von Metalloxidnitridgemischen oder Metalloxidnitridgemischverbindungen als ein hochstabiler Sensor für den Einsatz in der industriellen Prozeßmeßtechnik und der Umweltüberwachung. Aufgrund der amorphen bzw. monokristallinen Schichtgestaltung und der damit verbundenen hohen Einschwinggeschwindigkeit findet dieser Sensor ferner in der Medizintechnik ein großes Einsatzpotential. Besonders günstige Eigenschaften lassen sich dabei durch Verwendung von Hafniumtantaloxidnitridgemischen und Hafniumtantaloxidnitridgemischverbindungen sowie durch Zirkoniumtantaloxidnitridgemischen und Zirkoniumtantaloxidnitridgemischverbindungen erreichen.

Bevorzugte Ausführungsbeispiele der vorliegenden Erfindung werden nachfolgend Bezug nehmend auf die beiliegende Zeichnung näher erläutert. Es zeigt:

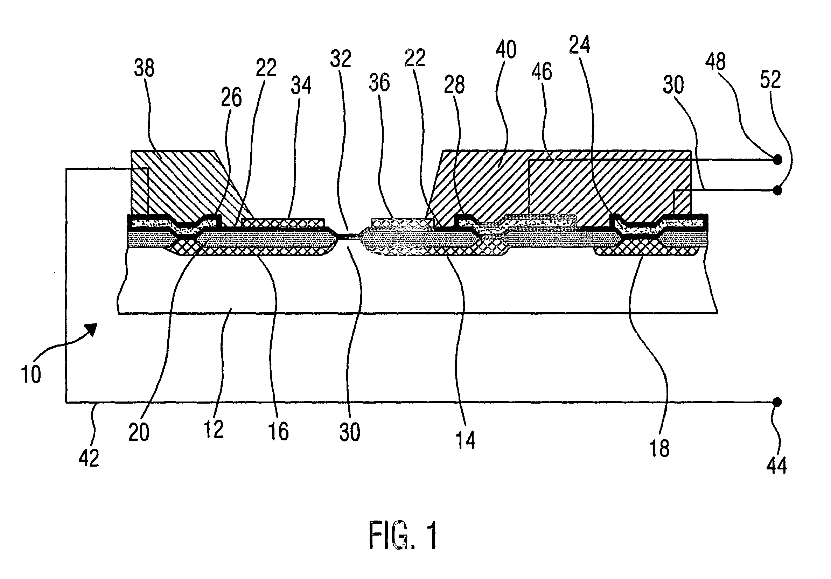

- Fig. 1: eine Querschnittdarstellung eines ionensensitiven Feldeffekttransistors gemäß einem bevorzugten Ausführungsbeispiel der vorliegenden Erfindung.

In Fig. 1 ist eine Querschnittdarstellung eines ionensensitiven Feldeffekttransistors (ISFET) 10 gezeigt. Der ionensensitive Feldeffekttransistor 10 umfaßt ein Halbleitersubstrat 12, z. B. ein Siliziumsubstrat. In dem Substrat 12 ist ein Source-Bereich 14 und ein Drain-Bereich 16 gebildet. Das Substrat weist ferner einen Substratanschlußbereich 18 auf. Bei dem Substrat kann es sich um eine Kombination aus einem Trägersubstrat und einer darauf aufgebrachten Epitaxieschicht handeln, in der die aktiven Bereiche des Bauelements gebildet werden.

Auf einer Oberfläche des Substrats 12 ist eine Feldoxidschicht 20 gebildet. Auf der Feldoxidschicht 20 erstreckt sich eine weitere isolierende Schicht 22.

Der Feldeffekttransistor 10 umfaßt ferner einen Anschlußkontakt 24, der sich durch die Feldoxidschicht 20 und die isolierende Schicht 22 erstreckt und mit dem Substratanschlußbereich 18 verbunden ist. Ferner umfaßt der Feldeffekttransistor 10 einen Drain-Kontakt 26, der sich durch die Feldoxidschicht 20 und die isolierende Schicht 22 erstreckt und mit dem Drain-Bereich 16 verbunden ist. Ferner ist ein Source-Kontakt 28 gebildet, der sich durch die Feldoxidschicht 20 und die isolierende Schicht 22 erstreckt und mit dem Source-Bereich 14 verbunden ist.

Zwischen dem Source-Bereich 14 und dem Drain-Bereich 16 ist ein Kanalbereich 30 definiert. Oberhalb des Kanalbereichs 30 ist ein Gate 32 gebildet, das erfindungsgemäß eine sensitive Schicht aus einem Metalloxidnitridgemisch oder einer Metalloxidnitridgemischverbindung aufweist, die bei einer Messung in direkte Berührung mit dem Meßmedium kommt. Wie es in Fig. 1 gezeigt ist, kann die sensitive Schicht 32 zusammenhängend mit der isolierenden Schicht 22 gebildet sein. Bei einem Ausführungsbeispiel kann die isolierende Schicht 22 aus dem Material der sensitiven Schicht 32, d.h. aus einem Metalloxidnitridgemisch oder einer Metalloxidnitridgemischverbindung, bestehen.

Gemäß der Fig. 1 umfaßt der Feldeffekttransistor 10 weitere Isolationsschichten 34 und 36, die jeweils seitlich des Kanalbereichs 30 auf der isolierenden Schicht 22 gebildet sind. Auf dem Drain-Kontakt 26 ist ferner eine erste Passivierungsschicht 38 gebildet. Ferner weist der Feldeffekttransistor 10 eine zweite Passivierungsschicht 40 auf, die sich über den Source-Kontakt 28 und den Substratanschlußkontakt 24 erstreckt. Der Drain-Kontakt 26 ist über eine Leitung 42 mit einem Drain-Anschluß 44 verbunden, der Source-Kontakt 28 ist über eine Leitung 46 mit einem Source-Anschluß 48 verbunden, und der Substratanschluß 24 ist über eine Leitung 50 mit einem Substratanschluß 52 verbunden.

Die Herstellung des erfindungsgemäßen ionensensitiven Feldeffekttransistors kann vorzugsweise in einem CMOS-Prozeß erfolgen. Dadurch ist ein preisgünstiges Herstellen und eine Integration weiterer Schaltungsbauteile auf dem Substrat 10 ermöglicht.

Die sensitive Schicht 32 wird vorzugsweise durch ein Sputtern des Metalls oder des Metalloxids in einer Sauerstoff-N₂-Atmosphäre oder durch CVD-Abscheidung hergestellt. Zur Ausheilung und Verbesserung der Schichteigenschaften kann anschließend eine Temperaturbehandlung bei Temperaturen von > 500°C unter einer Atmosphäre mit inerten oder oxidierenden oder nitridierenden Eigenschaften oder deren gewünschten Eigenschaften durchgeführt werden.

einer Inertatmosphäre oder mit oxidierend wirkenden Gaskomponenten durchgeführt werden.

Der ionensensitive Feldeffekttransistor ist vorzugsweise auf einem Chip mit einer Fläche von etwa 3,5 x 3,5 mm² angeordnet und wird im Verbund auf 150 mm Siliziumwafern in einer Halbleiterlinie gefertigt. Nach einem Vereinzeln des Wafers in Chips werden die vereinzelten Chips auf geeignete Substrate geklebt, kontaktiert und mittels spezieller Aufbauverfahren zu kompletten Meßsystemen komplettiert. Aus den Chips bzw. Boards werden beispielsweise Eintauchelektroden für die pH-Messung hergestellt.

Bei einem Ausführungsbeispiel ist es vorgesehen, die sensitive Schicht 32 direkt auf das Substrat, d. h. auf den Kanalbereich des Substrats 10, aufzubringen. Dabei wirkt die sensitive Schicht 32 sowohl als Gate-Isolationsschicht als auch als sensitive Schicht, die das ionensensitive Erfassen ermöglicht.

Ferner kann die erfindungsgemäße sensitive Schicht aus einem Metalloxidnitridgemisch oder einer Metalloxidnitridgemischverbindung durch ein Sputtern eines Metalls erfolgen, das in einem Nachfolgeschritt oxidiert und nitridiert wird.

Die erfindungsgemäße Verwendung des Metalloxidnitridgemisches oder Verbindungen derselben ermöglicht ferner mittels Einstellungen von Parametern während des Herstellungsverfahrens, daß die sensitive Schicht eine Struktur zwischen amorph und nanokristallin aufweist. Dies kann beispielsweise durch ein geeignetes Einstellen der Abscheidung und der Nachbehandlung erreicht werden.

Zur Anpassung des Ausdehnungskoeffizienten können Grenzflächenschichten an Oberflächen der sensitiven Schicht gebildet werden. Die Grenzflächenschichten umfassen beispielsweise Metalloxidsilikate bzw. Metalloxidnitridsilikate, die durch ein Tempern oder durch ein Sputtern bzw. ein CVD-Abscheiden (CVD = chemical vapour deposition = chemische Gasphasenabscheidung) abgeschieden werden.

Bei einem Betrieb des ionensensitiven Feldeffekttransistors als Meßsensor zur Erfassung beispielsweise von Ionenkonzentrationen eines Meßfluids wird der ionensensitive Feldeffekttransistor derart in Kontakt mit dem Meßmedium gebracht, daß eine Oberfläche der sensitiven Schicht 32 eine Berührung mit dem Meßmedium aufweist. Ferner wird eine Referenzelektrode, die beispielsweise aus Ag, AgCl und KCl bestehen kann, in das Meßmedium eingebracht.

Über eine Spannungsquelle, die zwischen den Drain-Anschluß und den Source-Anschluß eine elektrische Spannung anlegt, wird ein Drain-Source-Strom bewirkt, wobei der Substratanschlußkontakt auf ein Bezugspotential, z. B. Masse, gebracht wird.

Zwischen der Referenzelektrode und dem Gate bildet sich aufgrund einer unterschiedlichen elektrochemischen Spannungswertigkeit der Materialien der Referenzelektrode und der sensitiven Schicht des Gates eine elektrische Spannung aus, die von einer Ionenkonzentration des Meßmediums abhängt. Bei einem bevorzugten Ausführungsbeispiel steuert die Spannungsquelle die Drain-Source-Spannung so, daß stets ein konstanter Drain-Source-Strom fließt. Bei diesem Ausführungsbeispiel ändert sich die elektrische Spannung zwischen der Referenzelektrode und dem Gate abhängig von der Ionenkonzentration des Meßmediums, wobei die zwischen der Source und der Referenzelektrode anliegende Spannung eine Meßgröße darstellt, die von einer Ionenkonzentration des Meßmediums abhängt.

Der erfindungsgemäße ionensensitive Feldeffekttransistor kann bei einem Ausführungsbeispiel ein p-dotiertes Substrat aufweisen, wobei die Source-Bereiche und die Drain-Bereiche als n-dotierte Bereiche ausgebildet sind. Ferner kann der ionensensitive Feldeffekttransistor ein n-dotiertes Substrat mit p-dotierten Source- und Drain-Bereichen umfassen.

## Patentansprüche

1. Ionensensitiver Feldeffekttransistor (10) mit einem Gate, das eine sensitive Schicht (32) aufweist, **dadurch gekennzeichnet dass** die sensitive Schicht (32) ein Metalloxidnitridgemisch und/oder eine Metalloxidnitridgemischverbindung aufweist.

2. Ionensensitiver Feldeffekttransistor gemäß Anspruch 1, bei dem das Metalloxidnitridgemisch ein Hafniumtantaloxidnitridgemisch und die Metalloxidnitridgemischverbindung eine Hafniumtantaloxidnitridgemischverbindung ist.

3. Ionensensitiver Feldeffekttransistor gemäß Anspruch 1, bei dem das Metalloxidnitridgemisch ein Zirkoniumtantaloxidnitridgemisch und die Metalloxidnitridgemischverbindung eine Zirkoniumtantaloxidnitridgemischverbindung ist.

4. Ionensensitiver Feldeffekttransistor gemäß einem der Ansprüche 1 bis 3, bei dem die sensitive Schicht direkt auf einem Kanalbereich (30) eines Substrats (12) oder direkt auf einer Gate-Isolationsschicht aufgebracht ist.

5. Ionensensitiver Feldeffekttransistor gemäß einem der Ansprüche 1 bis 4, bei dem zwischen dem Substrat und der sensitiven Schicht (32) eine oder mehrere Anpassungsschichten zum Ausgleichen unterschiedlicher Ausdehnungskoeffizienten aufgebracht sind, die vorzugsweise Metalloxidsilikate bzw. Metalloxidnitridsilikate umfassen.

6. Verfahren zur Herstellung eines ionensensitiven Feldeffekttransistors mit folgenden Schritten:
Bereitstellen eines Substrats mit einem Source-Bereich (14) und einem Drain-Bereich (16); und
Bereitstellen eines Gates mit einer sensitiven Schicht (32), **dadurch gekennzeichnet, dass** die sensitive Schicht (32) ein Metalloxidnitridgemisch und/oder eine Metalloxidnitridgemischverbindung umfaßt.

7. Verfahren gemäß Anspruch 6, bei dem die sensitive Schicht durch ein Sputtern oder durch eine chemische Gasphasenabscheidung erzeugt wird.

8. Verfahren gemäß Anspruch 6, bei dem die sensitive Schicht mittels folgender Schritte erzeugt wird:
Sputtern eines Metalls; und
Durchführen einer Oxidierung und einer Nitridierung des Metalls.

9. Verfahren gemäß einem der Ansprüche 6 bis 8, das ferner den Schritt eines Temperns der sensitiven Schicht (32) zum Einstellen von Sensoreigenschaften umfaßt.

10. Verfahren gemäß einem der Ansprüche 6 bis 9, bei dem das Erzeugen der sensitiven Schicht (32) durch ein Einstellen von Parametern bei einem Abscheiden und/oder Nachbehandeln der sensitiven Schicht derart erzeugt wird, daß die Struktur derselben zwischen amorph und nanokristallin liegt.

11. Verfahren gemäß einem der Ansprüche 6 bis 10, das ferner den Schritt eines Erzeugens von Grenzflächenschichten zwischen dem Substrat (12) und der sensitiven Schicht (32) zum Anpassen der jeweiligen Ausdehnungskoeffizienten derselben umfaßt.

12. Verfahren gemäß Anspruch 11, bei dem die Grenzflächenschichten Metalloxidsilikate und/oder Metalloxidnitridsilikate umfassen.

13. Verfahren gemäß Anspruch 11 oder 12, bei dem das Erzeugen von Grenzflächenschichten mittels eines Temperns, eines Sputterns oder einer chemischen Gasphasenabscheidung erfolgt.

## Claims

1. An ion-sensitive field effect transistor (10) with a gate comprising a sensitive layer (32), **characterized in that** the sensitive layer (32) comprises a metal oxide nitride mixture and/or a metal oxide nitride mixture compound.

2. The ion-sensitive field effect transistor of claim 1, wherein the metal oxide nitride mixture is a hafnium tantalum oxide nitride mixture and the metal oxide nitride mixture compound is a hafnium tantalum oxide nitride mixture compound.

3. The ion-sensitive field effect transistor of claim 1, wherein the metal oxide nitride mixture is a zirconium tantalum oxide nitride mixture and the metal oxide nitride mixture compound is a zirconium tantalum oxide nitride mixture compound.

4. The ion-sensitive field effect transistor of one of claims 1 to 3, wherein the sensitive layer is deposited directly on a channel region (30) of a substrate (12) or directly on a gate isolation layer.

5. The ion-sensitive field effect transistor of one of claims 1 to 4, wherein, for compensating different expansion coefficients, one or more adaptation layers are deposited between the substrate and the sensitive layer (32), which preferably include metal oxide silicates and/or metal oxide nitride silicates.

6. A method for producing an ion-sensitive field effect transistor, comprising:
providing a substrate with a source region (14) and a drain region (16); and
providing a gate with a sensitive layer (32),
**characterized in that** the sensitive layer (32) includes a metal oxide nitride mixture and/or a metal oxide nitride mixture compound.

7. The method of claim 6, wherein the sensitive layer is generated by sputtering or by chemical gas phase deposition.

8. The method of claim 6, wherein the sensitive layer is generated by means of the following steps:
sputtering a metal; and
performing an oxidation and a nitridization of the metal.

9. The method of one of claims 6 to 8, further comprising the step of tempering the sensitive layer (32) for adjusting sensor properties.

10. The method of one of claims 6 to 9, wherein generating the sensitive layer (32) is generated by adjusting parameters in depositing and/or post-treating the sensitive layer such that its structure is between amorphous and nanocrystalline.

11. The method of one of claims 6 to 10, further comprising the step of generating interface layers between the substrate (12) and the sensitive layer (32) for adapting their respective expansion coefficients.

12. The method of claim 11, wherein the interface layers include metal oxide silicates and/or metal oxide nitride silicates.

13. The method of claim 11 or 12, wherein generating interface layers is performed by means of tempering, sputtering or chemical gas phase deposition.

## Revendications

1. Transistor à effet de champ sensible aux ions (10) avec une porte présentant une couche sensible (32), **caractérisé par le fait que** la couche sensible (32) présente un mélange de nitrure d'oxyde métallique et/ou une liaison à base de mélange de nitrure d'oxyde métallique.

2. Transistor à effet de champ sensible aux ions selon la revendication 1, dans lequel le mélange de nitrure d'oxyde métallique est un mélange de nitrure d'oxyde de hafnium et de tantale et la liaison à base de mélange de nitrure d'oxyde métallique est une liaison à base de mélange de nitrure d'oxyde de hafnium et de tantale.

3. Transistor à effet de champ sensible aux ions selon la revendication 1, dans lequel le mélange de nitrure d'oxyde métallique est un mélange de nitrure d'oxyde de zirconium et de tantale et la liaison à base de mélange de nitrure d'oxyde métallique est une liaison à base de mélange de nitrure d'oxyde de zirconium et de tantale.

4. Transistor à effet de champ sensible aux ions selon l'une des revendications 1 à 3, dans lequel la couche sensible est appliquée directement sur une zone de canal (30) d'un substrat (12) ou directement sur une couche d'isolation de porte.

5. Transistor à effet de champ sensible aux ions selon l'une des revendications 1 à 4, dans lequel sont appliquées, entre le substrat et la couche sensible (32), une ou plusieurs couches d'adaptation destinées à compenser différents coefficients de dilatation qui comportent, de préférence, des silicates d'oxyde métallique ou des silicates de nitrure d'oxyde métallique.

6. Procédé de production d'un transistor à effet de champ sensible aux ions, avec les étapes suivantes consistant à :
préparer un substrat avec une zone de source (14) et une zone de drain (16) ; et
préparer une porte avec une couche sensible (32),
**caractérisé par le fait que** la couche sensible (32) comporte un mélange de nitrure d'oxyde métallique et/ou une liaison à base de mélange de nitrure d'oxyde métallique.

7. Procédé selon la revendication 6, dans lequel la couche sensible est générée par un dépôt par pulvérisation ou par un dépôt chimique en phase gazeuse.

8. Procédé selon la revendication 6, dans lequel la couche sensible est générée au moyen des étapes suivantes consistant à :
déposer un métal par pulvérisation ; et
réaliser une oxydation et une nitruration du métal.

9. Procédé selon l'une des revendications 6 à 8, comportant, par ailleurs, l'étape consistant à tremper la couche sensible (32) pour régler les propriétés de sensibilité.

10. Procédé selon l'une des revendications 6 à 9, dans lequel la génération de la couche sensible (32) est générée par un réglage de paramètres lors d'un dépôt et/ou d'un post-traitement de la couche sensible de sorte que la structure de celle-ci se situe entre amorphe et nanocristalline.

11. Procédé selon l'une des revendications 6 à 10, comprenant, par ailleurs, l'étape consistant à générer des couches d'interface entre le substrat (12) et la couche sensible (32) destinées à adapter les coefficients de dilatation respectifs de ces derniers.

12. Procédé selon la revendication 11, dans lequel les couches d'interface comportent des silicates d'oxyde métallique et/ou des silicates de nitrure d'oxyde métallique.

13. Procédé selon la revendication 11 1 ou 12, dans lequel la génération de couches d'interface a lieu au moyen d'un trempage, d'un dépôt par pulvérisation ou d'un dépôt chimique en phase gazeuse.
